# FASCICULE DE BREVET EUROPEEN

(11) **EP 3 691 143 B1**
(45) Date de publication et mention de la délivrance du brevet: **01.12.2021**
(21) Numéro de dépôt: 20154003.6
(22) Date de dépôt: 28.01.2020
(51) Int. Cl.: H04B 7/204

(54) **SYSTEME DE COMMUNICATION PAR SATELLITE A DEMODULATION DISTRIBUEE**
SATELLITENKOMMUNIKATIONSSYSTEM MIT VERTEILTER DEMODULATION
SATELLITE COMMUNICATION SYSTEM WITH DISTRIBUTED DEMODULATION

(30) Priorité: 31.01.2019 FR 1900909
(43) Date de publication de la demande: 05.08.2020
(73) Titulaire: Thales, 92400 Courbevoie (FR)
(72) Inventeur: BOUTILLON, Jean-François, 31037 Toulouse Cedex 1 (FR)
(74) Mandataire: Marks & Clerk France

(56) Documents cités:
- KR-A- 20010 010 651
- HIROKI NISHIYAMA ET AL: "Load Balancing and QoS Provisioning Based on Congestion Prediction for GEO/LEO Hybrid Satellite Networks", PROCEEDINGS OF THE IEEE, IEEE. NEW YORK, US, vol. 99, no. 11, 1 novembre 2011 (2011-11-01), pages 1998-2007, XP011363245, ISSN: 0018-9219, DOI: 10.1109/JPROC.2011.2157885
- AIDA NATHALIE URQUIZO MEDINA ET AL: "QoS Routing for LEO Satellite Networks", 28 novembre 2012 (2012-11-28), PERVASIVE COMPUTING AND THE NETWORKED WORLD, SPRINGER BERLIN HEIDELBERG, BERLIN, HEIDELBERG, PAGE(S) 482 - 494, XP047026221, ISBN: 978-3-642-37014-4 * le document en entier *
- TALEB T ET AL: "Explicit Load Balancing Technique for NGEO Satellite IP Networks With On-Board Processing Capabilities", IEEE / ACM TRANSACTIONS ON NETWORKING, IEEE / ACM, NEW YORK, NY, US, vol. 17, no. 1, 1 février 2009 (2009-02-01), pages 281-293, XP011246763, ISSN: 1063-6692

## Description

L'invention concerne le domaine des systèmes de télécommunication par satellite. Elle porte plus précisément sur un système de télécommunication ayant une capacité de démodulation distribuée entre différents satellites d'une constellation. L'invention a pour objectif la réduction de la masse, de la taille, du coût et de la consommation d'un processeur à bord d'un satellite en charge de la démodulation des signaux reçus.

Dans un système de télécommunication par satellite basé sur une ou plusieurs constellations de satellites, chaque satellite est chargé de servir une zone de couverture terrestre. Selon la nature de la zone (terrestre ou maritime notamment), le nombre d'utilisateurs à servir dans la zone peut être fortement variable. Ainsi, chaque satellite d'une constellation, doit servir un nombre d'utilisateurs variable, notamment du fait du mouvement des satellites autour de la Terre.

Chaque satellite comprend une charge utile régénérative qui a notamment pour fonction la démodulation et la modulation des signaux provenant et à destination d'utilisateurs situés dans la zone de couverture du satellite. Un processeur à bord du satellite (On Board Processor en anglais) est chargé de cette opération. Le dimensionnement du processeur dépend notamment du nombre de porteuses fréquentielles et de la largeur de bande du signal à démoduler dans une même unité de temps. Actuellement, ces processeurs sont dimensionnés de sorte à pouvoir servir au moins 95%, voire 100% du nombre maximum d'utilisateurs possibles dans une zone de couverture, c'est-à-dire au moins 95%, voire 100%, du pire cas.

Un tel dimensionnement a pour inconvénient que chaque satellite est équipé d'un processeur qui peut être sous-utilisé dans les périodes où la zone de couverture comprend un nombre d'utilisateurs plus faible. Par ailleurs, la zone de couverture d'un satellite se déplace au cours du temps et peut couvrir des zones à faible densité d'utilisateurs, typiquement des océans ou des zones désertiques. Les processeurs sont donc surdimensionnés ce qui a pour conséquence un cout, un encombrement (masse, taille) et une consommation plus importante.

Il existe donc un besoin pour réduire le dimensionnement des processeurs à bord des satellites tout en garantissant le même niveau de service rendu aux utilisateurs.

Une solution existante permettant de réduire la consommation des processeurs à bord des satellites consiste à implémenter un mode de consommation réduite dans le cas d'une sous-charge du processeur due à un nombre d'utilisateurs simultanés réduit. Cependant, ce type de solution ne permet de réduire la consommation du processeur que dans une certaine limite et n'est pas équivalente à un dimensionnement optimal du processeur dès sa conception. En conséquence, le processeur consomme plus d'énergie qu'il ne devrait et ces pertes d'énergie sont pénalisantes pour le satellite. De plus, cette réduction de consommation ne s'accompagne pas d'une réduction de la taille ni de la masse du processeur et ne résout donc pas ce problème.

On connait par ailleurs la solution décrite dans le document « Load balancing and QoS provisioning based on congestion prédiction for GEO/LEO hybrid satellite networks, Hiroki Nishiyama et al »

La présente invention propose une solution permettant de réduire la taille des processeurs à bord des satellites en mettant en œuvre une démodulation distribuée des signaux émis par les utilisateurs vers un satellite, par l'ensemble des satellites de la constellation. De cette manière, le dimensionnement des processeurs peut être réduit car un satellite en surcharge peut transmettre les signaux reçus qu'il n'est pas en capacité de démoduler à un ou plusieurs satellites voisins qui, présentent au même moment une sous-charge. L'invention prend ainsi en compte la variabilité du nombre d'utilisateurs par zone de couverture pour adapter les capacités de traitement de l'ensemble des processeurs à bord des satellites de la constellation à la densité globale d'utilisateurs présents dans les différentes zones de couverture couvertes par les satellites. L'invention utilise pour cela des liens de communication inter-satellites.

L'invention est définie par les revendications 1-8.

Les dessins annexés illustrent l'invention :
[Fig.1] représente un système de télécommunications par satellite régénératif avec liens inter satellites selon l'art antérieur,
[Fig.2] illustre le fonctionnement d'un système de télécommunications par satellite selon l'invention pour une transmission d'un utilisateur vers une station passerelle,
[Fig.3] illustre le fonctionnement d'un système de télécommunications par satellite selon l'invention pour une transmission d'une station passerelle vers un utilisateur,
[Fig.4] représente un exemple de charge utile d'un satellite selon l'invention,
[Fig.5] représente un organigramme détaillant les étapes de mise en œuvre d'un procédé de planification de ressources dans un système de télécommunications selon l'invention.

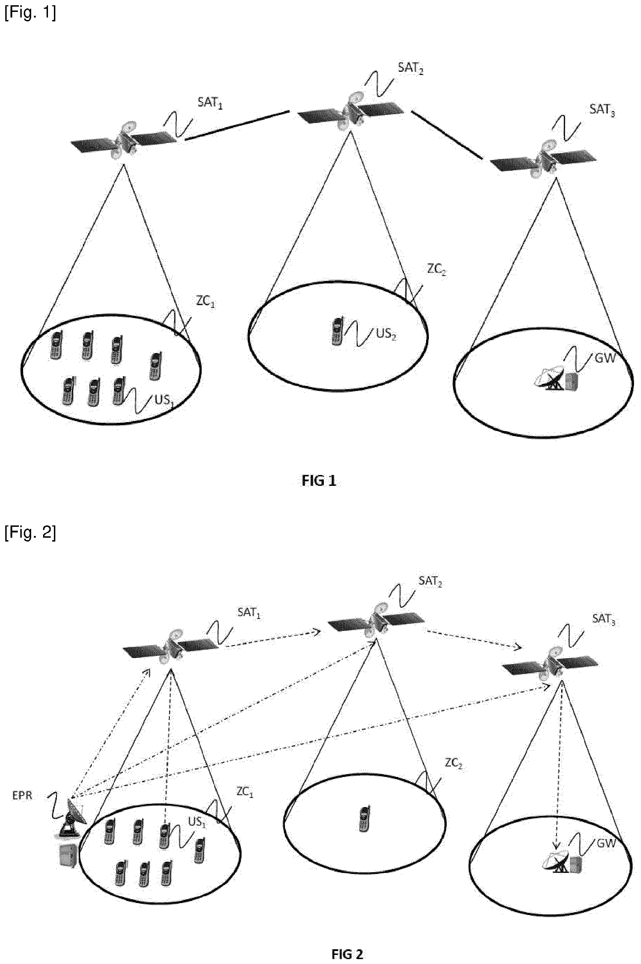

La figure 1 représente un système de télécommunications par satellite selon l'art antérieur, qui comprend une constellation de satellites à charges utiles régénératives reliées entre eux par des liens inter-satellites. Le service rendu par le système de télécommunications par satellites consiste en une liaison de communication entre un utilisateur d'un terminal US₁,US₂ et une passerelle d'accès GW (ou Gateway en anglais) à un réseau terrestre, par exemple le réseau Internet. L'expression « utilisateur » désigne en pratique le terminal qu'utilise l'utilisateur pour communiquer via le système. Ce terminal est généralement équipé d'une ou plusieurs antennes destinées à recevoir les signaux du satellite avec lequel il est en contact ou à lui envoyer des signaux, et un modem destiné à démoduler les données reçues du satellite pour les transmettre à l'utilisateur, et à moduler les données reçues de l'utilisateur pour les envoyer au satellite via l'antenne. Le lien de communication (bidirectionnel) entre un utilisateur et une passerelle d'accès est établi via des liaisons entre l'utilisateur et un satellite, entre plusieurs satellites et entre un satellite et la passerelle d'accès. Sur l'exemple de la figure 1, le lien de communication entre l'utilisateur US₁ et la passerelle d'accès GW passe par les satellites SAT₁,SAT₂ et SAT₃. Le lien de communication entre l'utilisateur US₂ et la passerelle d'accès GW passe par les satellites SAT₂ et SAT₃.

Chaque satellite SAT₁,SAT₂ couvre une zone de couverture terrestre ZC₁,ZC₂ qui, à chaque instant, présente une densité d'utilisateurs variable. Sur l'exemple de la figure 1, la zone de couverture ZC₁ du satellite SAT₁ contient un grand nombre d'utilisateurs alors que la zone de couverture ZC₂ du satellite SAT₂ contient un faible nombre d'utilisateurs. Comme indiqué en préambule, le processeur en charge de la démodulation des signaux émis par les utilisateurs est dimensionné, dans chaque satellite, à partir d'un pire cas de nombre d'utilisateurs par zone de couverture. Par exemple, il est dimensionné pour traiter simultanément les signaux provenant de 95% à 100% du nombre maximum d'utilisateurs par zone de couverture. En dimensionnant les processeurs à bord des satellites de cette façon, on voit qu'à certains instants, le processeur est sous utilisé car la zone de couverture ne comprend qu'un faible nombre d'utilisateurs. C'est le cas du processeur à bord du satellite SAT₂ sur la figure 1.

L'invention propose une solution permettant de diminuer la taille des processeurs à bord et l'énergie qu'ils consomment en les dimensionnant pour qu'il soit capable de traiter non plus 95% à 100% du nombre maximum d'utilisateurs mais une charge moyenne de, par exemple, 50% du nombre maximum d'utilisateurs, ou encore égale au nombre total d'utilisateurs à traiter sur Terre divisé par le nombre de satellites de la constellation. De cette manière, la quantité d'énergie consommée est réduite significativement.

Pour pouvoir assurer la même qualité de service avec des processeurs plus petits, l'invention consiste à distribuer le traitement de la démodulation des signaux reçus par les satellites sur plusieurs satellites de la constellation, en fonction de la charge réelle de chaque processeur correspondant à la densité instantanée d'utilisateurs dans chaque zone de couverture.

La figure 2 illustre un exemple de mise en œuvre de l'invention pour le traitement d'une liaison entre un utilisateur US₁ et une passerelle d'accès GW.

Les signaux radiofréquences émis sur la liaison entre un utilisateur au sol et un satellite sont regroupés par faisceaux, chaque faisceau correspondant à un spot associé à un élément antennaire du dispositif antennaire multi-spots du satellite. Une zone de couverture regroupe l'ensemble des spots éclairés par l'ensemble des faisceaux générés par une antenne ou un réseau antennaire multi-spots embarqué dans le satellite.

Le système selon l'invention comporte un équipement de planification de ressources EPR qui est chargé, à chaque instant ou intervalle temporel prédéfini, de définir la charge de démodulation de chaque satellite de la constellation en fonction de la densité réelle d'utilisateurs dans chaque spot de chaque zone de couverture. L'équipement de planification de ressources EPR a, à chaque instant, une indication concernant le nombre d'utilisateurs dans chaque spot, grâce à des rapports envoyés par les satellites.

En fonction de cette indication, l'équipement de planification de ressources EPR transmet à chaque satellite de la constellation, via une liaison de signalisation, une information de planification de ressources qui comprend, pour chaque intervalle de temps et pour chaque faisceau ou spot, l'adresse du satellite de la constellation qui est en charge de la démodulation des signaux reçus via ce faisceau pour cet intervalle de temps.

La planification de ressources prend en compte la densité instantanée d'utilisateurs dans chaque zone de couverture et la densité instantanée de trafic à traiter. Ainsi, dans l'exemple de la figure 2, la zone de couverture ZC₁ présente une forte densité d'utilisateurs tandis que la zone de couverture ZC₂ présente une faible densité d'utilisateurs. En conséquence, le processeur à bord du satellite SAT₁ ne peut pas traiter tous les signaux simultanément émis par tous les utilisateurs de sa zone de couverture. L'information de planification de ressources va alors lui indiquer de transmettre les signaux reçus via certains faisceaux, à d'autres satellites, par exemple le satellite SAT₂ dont le processeur n'est pas chargé à 100%.

Ainsi, dans l'exemple de la figure 2, le signal émis par l'utilisateur US₁ est reçu par le satellite SAT₁ qui numérise le signal puis encapsule les échantillons numérisés dans une trame, par exemple une trame Ethernet, en ajoutant, dans l'entête de la trame, la nature des échantillons de la trame (échantillons à démoduler) et l'adresse destination du satellite SAT₂ en charge de démoduler ces échantillons. Le signal encapsulé est transmis sur une liaison inter-satellites qui est, par exemple, une liaison optique en espace libre ou liaison laser. A réception du signal encapsulé le processeur du satellite SAT₂ vérifie que les trames contiennent des échantillons à démoduler et qu'il est en charge de la démodulation. Comme le lui a indiqué l'équipement de planification de ressources EPR, le processeur du satellite SAT₂ démodule les échantillons puis transmet le signal démodulé à sa destination, c'est-à-dire la station passerelle GW via, par exemple, un ou plusieurs autre(s) satellite(s) SAT₃. L'équipement de planification de ressources EPR s'est assuré que le processeur du satellite SAT₂ n'est pas chargé à 100% et qu'il a les ressources nécessaires pour démoduler les échantillons reçus du satellite SAT₁.

En synthèse, grâce à la planification de ressources établie par l'équipement de planification de ressources EPR, chaque satellite de la constellation a l'information à chaque instant des faisceaux reçus qu'il est capable de démoduler directement et des faisceaux reçus qu'il doit transmettre à un autre satellite moins chargé qui va réaliser la démodulation.

Bien que sur la figure 2, les satellites SAT₁ et SAT₂ sont représentés voisins, ils peuvent être distants et reliés via plusieurs bonds impliquant d'autres satellites.

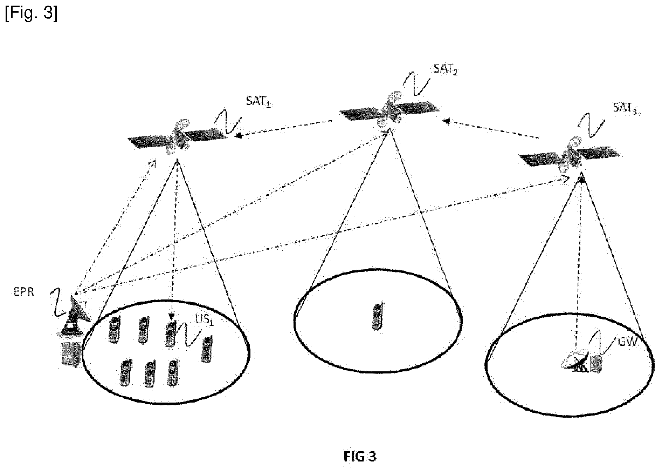

La figure 3 illustre un exemple de mise en œuvre de l'invention pour le traitement d'une liaison entre une passerelle d'accès GW et un utilisateur US₁. Pour cette liaison, le principe de l'invention est identique à l'exemple décrit précédemment pour la figure 2, à la différence près que les signaux reçus par un satellite SAT₃ en provenance de la passerelle d'accès GW sont transmis sur des porteuses fréquentielles différentes selon leur destination, c'est-à-dire l'utilisateur destinataire. Autrement dit, le partage des ressources de transmission entre utilisateurs se fait par fréquences porteuses et non par faisceaux comme dans le cas illustré à la figure 2.

L'équipement de planification de ressources EPR transmet une information de planification de ressources à chaque satellite, cette information indiquant pour chaque intervalle de temps, quel satellite de la constellation est en charge de démoduler les signaux reçus sur chaque porteuse. Autrement dit, lorsque le satellite SAT₃ reçoit un signal provenant de la station passerelle GW, il sait, en fonction de la porteuse du signal, s'il doit le démoduler (car il en a la capacité) ou s'il doit transmettre les échantillons numérisés de ce signal à un autre satellite en charge de la démodulation, selon le même principe que décrit pour la figure 2.

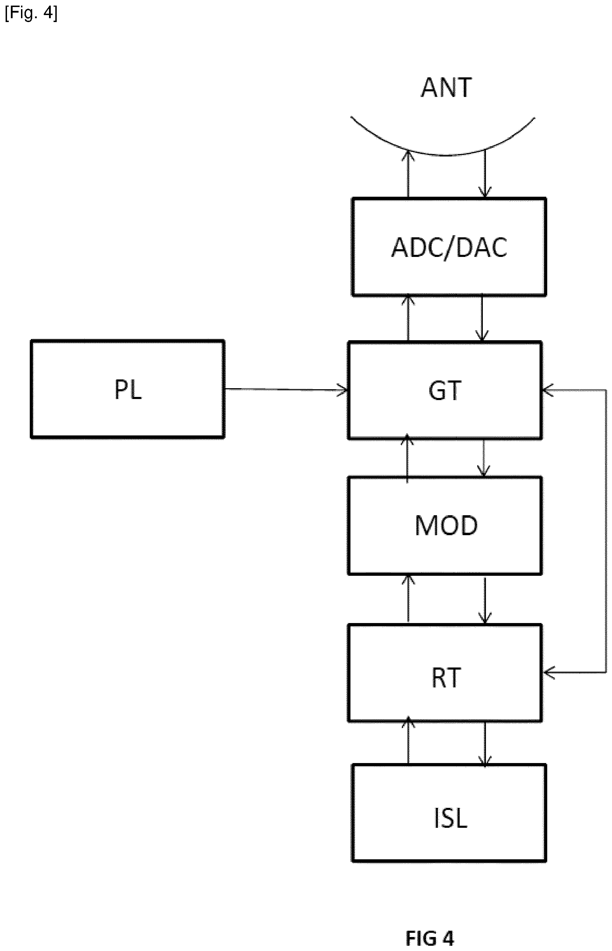

La figure 4 schématise un exemple de charge utile d'un satellite selon un mode de réalisation de l'invention. La charge utile comprend une ou plusieurs antenne(s) ou réseau(x) antennaire(s) ANT apte à émettre et recevoir des signaux sous forme de plusieurs faisceaux éclairant plusieurs spots formant ensemble une zone de couverture. Dans chaque spot sont situés plusieurs utilisateurs opérant via un terminal. Le dispositif antennaire ANT comprend aussi une autre antenne ou réseau antennaire pour établir une liaison avec une passerelle réseau GW au sol. Dans ce cas, la liaison n'est pas établie sous forme de faisceaux mais comprend plusieurs porteuses fréquentielles, chaque porteuse étant associée à un groupe d'utilisateurs. De façon générale, le dispositif antennaire ANT fait partie d'un émetteur/récepteur de signaux.

Lorsqu'un faisceau ou une porteuse est reçu par le dispositif antennaire ANT, les signaux analogiques associés sont numérisés via un convertisseur analogique numérique ADC. La charge utile comprend par ailleurs une mémoire ou un registre PL qui comprend une information de planification de ressources qui est mise à jour à chaque intervalle de temps, par exemple toutes les secondes. Cette information est transmise au satellite par l'équipement de planification de ressources EPR via une liaison de signalisation. L'information de planification de ressources contient une association entre le faisceau ou la porteuse reçue par le satellite et l'adresse du satellite en charge de la démodulation de ce faisceau ou de cette porteuse. Cette information de planification de ressources tient compte de l'état instantané de charge de chaque satellite. Autrement dit, elle tient compte de la densité d'utilisateurs présents dans chaque spot ou du débit de la porteuse provenant de la station passerelle.

La charge utile comprend également un organe de gestion de trafic GT qui réalise les opérations suivantes. Si l'information de planification de ressources indique que le satellite en charge de la démodulation du signal est le satellite qui reçoit le signal, alors le signal numérisé est transmis à un modem MOD qui réalise la démodulation du signal pour fournir des paquets de données utiles, par exemple des paquets respectant le format Ethernet ou tout autre format d'accès réseau. Les paquets démodulés sont ensuite transmis à un routeur RT qui transmet les paquets à leur destination, c'est-à-dire à la passerelle réseau GW. Le chemin qui relie le satellite à la passerelle réseau GW peut passer par un ou plusieurs autres satellites. Il est aussi possible que l'utilisateur et la passerelle réseau GW soient reliés au même satellite. Les satellites communiquent entre eux via une liaison inter-satellite. La liaison inter-satellite est réalisée au moyen d'une liaison optique en espace libre ou liaison laser. A cet effet, chaque charge utile contient un équipement de communication inter-satellite ISL qui peut être réalisé par un laser ou par un dispositif optique.

Si l'information de planification de ressources indique que le satellite en charge de la démodulation du signal n'est pas le satellite qui reçoit le signal mais un autre satellite de la constellation, alors le signal numérisé est encapsulé dans des trames de même nature que celles transmises par le modem MOD au routeur RT, par exemple des trames Ethernet. Dans l'entête de chaque trame, l'organe de gestion de trafic GT insère l'adresse destination du satellite en charge de la démodulation du signal numérisé et une information sur la nature du signal contenu dans les trames, c'est-à-dire un identifiant qui indique que les trames contiennent un signal numérisé à démoduler.

Les trames générées par l'organe de gestion de trafic GT sont ensuite transmises au routeur RT qui est en charge de transmettre les trames vers l'adresse destination.

Lorsque le satellite destinataire reçoit les trames, le routeur du satellite identifie la nature des trames et les transmet donc au modem MOD qui se charge de démoduler les échantillons numérisés. Les paquets de données utiles démodulés sont ensuite transmis au routeur RT qui les transmet jusqu'à leur destination, c'est-à-dire la passerelle réseau GW.

La charge utile selon l'invention peut être mise en œuvre par des moyens logiciels ou matériels ou par une combinaison de techniques logicielles et matérielles.

En particulier, l'organe de gestion de trafic GT, le modem MOD et le routeur RT peuvent être implémentés au moyen d'un processeur qui peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gâte Array ») ou de toute combinaison de ces dispositifs. L'invention peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel) ou sur toute combinaison de ces dispositifs.

L'information de planification de ressources est transmise aux satellites de la constellation par un équipement de planification de ressources EPR via une liaison de signalisation.

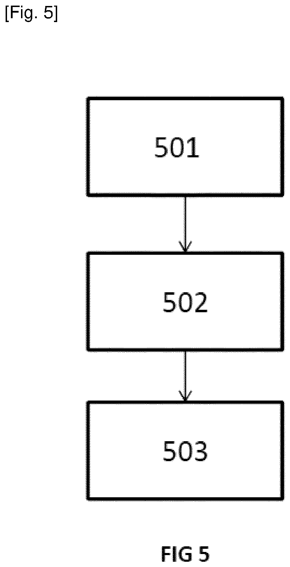

Dans le cas de la liaison montante entre les utilisateurs et le satellite, cette information est déterminée en fonction de la densité d'utilisateurs par spot/faisceau. Une méthode possible pour déterminer l'information de planification de ressources à un instant donné est illustrée par l'organigramme de la figure 5. Elle comprend une première étape 501 consistant à associer à chaque satellite, le traitement (démodulation) d'un nombre d'utilisateurs égal au minimum entre le nombre d'utilisateurs présent, à un instant donné, dans la zone de couverture du satellite et un nombre maximum d'utilisateurs correspondant à la capacité de démodulation de la charge utile du satellite. Par exemple, le dimensionnement du processeur à bord du satellite est tel qu'il est capable de démoduler simultanément N signaux. Si le nombre d'utilisateurs présents dans la zone de couverture est inférieur ou égal à N, alors le satellite est en charge de démoduler tous les signaux reçus. A l'inverse, si le nombre d'utilisateurs présents dans la zone de couverture est strictement supérieur à N, alors le satellite est en charge de démoduler seulement une partie des faisceaux.

A l'issue de la première étape 501, certains satellites présentent une charge de leur processeur qui est proche de ou égale à sa capacité maximale tandis que d'autres satellites présentent une charge inférieure ou égale à la capacité maximale car leur zone de couverture est moins dense en utilisateurs.

Dans une deuxième étape 502, les faisceaux qui n'ont pas été affectés au satellite qui couvre leur zone de couverture sont répartis vers les satellites pour lesquels le processeur à bord n'est pas chargé au maximum de sa capacité. Cette deuxième étape 502 peut être réalisée de façon itérative en plusieurs passes successives. Préférentiellement, on affecte la démodulation d'un faisceau à un satellite en priorité en fonction de sa proximité au satellite qui reçoit le faisceau, afin de minimiser les délais introduits par la transmission du faisceau à un satellite distant en charge de sa démodulation.

Lorsque chaque faisceau ou porteuse a été assigné à un satellite et que les informations de planification de ressources sont complètes, elles sont transmises 503 aux satellites par l'équipement de planification de ressources EPR.

Pour démoduler un faisceau ou une porteuse, les échantillons numériques à démoduler sont encapsulés dans une trame contenant au moins un identifiant indiquant que les échantillons numériques ne sont pas démodulés et une adresse destination du satellite en charge de la démodulation des échantillons numériques comme décrit précédemment.

Dans le cas de la liaison montante entre une passerelle d'accès GW et le satellite, l'information de planification de ressources est déterminée en fonction de la largeur de bande (exprimée en MHZ) de chaque porteuse émise par la passerelle. Cette largeur de bande dépend, entre autre, du nombre d'utilisateurs qui reçoivent simultanément des signaux de la passerelle d'accès GW via la même porteuse. Le procédé de planification de ressources fonctionne de la même façon que pour la liaison entre utilisateurs et un satellite, à la différence près qu'un faisceau est remplacé par une porteuse.

De façon générale, un faisceau ou une porteuse est associée à un autre satellite que le satellite qui reçoit le faisceau ou la porteuse si la capacité de démodulation du processeur à bord du satellite est atteinte du fait que le nombre de faisceaux ou de porteuses à démoduler simultanément est trop important compte tenu aussi du débit (dépendant du nombre d'utilisateurs) de la liaison associée au faisceau ou à la porteuse.

L'invention présente notamment l'avantage de permettre un dimensionnement réduit des processeurs à bord des satellites tout en garantissant le même niveau de service que les systèmes actuels.

L'invention permet aussi de baisser le nombre de redondances sur les processeurs a bord de chaque satellite car une panne d'une partie du processeur peut être compensée par la capacité de processeurs de satellites voisins. La gestion des redondances peut ainsi être simplifiée, ce qui contribue encore à la réduction en masse et cout des processeurs.

## Revendications

1. Charge utile de satellite de télécommunications comprenant un récepteur (ANT) de signaux émis sur une liaison montante, un convertisseur analogique numérique (ADC) pour convertir les signaux reçus en échantillons numériques, un modem (MOD) un équipement de communication inter-satellites (ISL) et un organe de gestion de trafic (GT) configuré pour, en fonction d'une information de planification de ressources (PL) dépendant de la capacité de démodulation de la charge utile, transmettre les échantillons numériques soit au modem (MOD) pour être démodulés, soit à l'équipement de communication inter-satellites (ISL) pour être transmis à un satellite destinataire, en charge de la démodulation des échantillons numériques,
chaque signal reçu par le récepteur de signaux (ANT) étant associé à un faisceau ou à une porteuse et l'information de planification de ressources (PL) contenant une association entre d'une part le faisceau ou la porteuse et d'autre part le satellite en charge de la démodulation du signal reçu,
l'organe de gestion de trafic (GT) étant configuré pour encapsuler les échantillons numériques dans une trame contenant au moins un identifiant indiquant que les échantillons numériques ne sont pas démodulés et une adresse destination du satellite en charge de la démodulation des échantillons numériques.

2. Charge utile de satellite de télécommunications selon la revendication 1 comprenant un routeur (RT) pour router les trames générées par l'organe de gestion de trafic (GT) ou démodulées par le modem (MOD) vers leur destination.

3. Charge utile de satellite de télécommunications selon la revendication 2 dans lequel le routeur (RT) est configuré pour, lorsqu'il reçoit une trame de l'équipement de communication inter-satellites (ISL), la transmettre au modem (MOD) pour être démodulée, si la trame contient des échantillons numériques à démoduler dont l'adresse destination est celle du satellite.

4. Charge utile de satellite de télécommunications selon l'une des revendications 2 ou 3 dans lequel le routeur (RT) est configuré pour, lorsqu'il reçoit une trame de l'équipement de communication inter-satellites (ISL), la transmettre au modem (MOD) pour être modulée, si la trame contient des échantillons démodulés dont l'adresse destination est celle du satellite.

5. Charge utile de satellite de télécommunications selon l'une des revendications précédentes dans lequel l'équipement de communication inter-satellites (ISL) est apte à établir une liaison de communication optique entre au moins deux satellites.

6. Système de télécommunications comprenant plusieurs satellites (SAT₁,SAT₂,SAT₃) comprenant chacun une charge utile selon l'une des revendications précédentes, le système comprenant aussi un équipement de planification de ressources (EPR) configuré pour déterminer, à différents instants, une information de planification de ressources (PL) et à la transmettre aux satellites du système.

7. Système de télécommunications selon la revendication 6 dans lequel l'équipement de planification de ressources (EPR) est configuré pour exécuter pour chaque intervalle de temps donné les étapes de :
- Pour chaque faisceau ou porteuse associé à une zone de couverture, affecter la démodulation du faisceau ou de la porteuse au satellite recevant le faisceau ou la porteuse si sa capacité de démodulation maximale n'est pas atteinte, sinon affecter la démodulation du faisceau ou de la porteuse à un autre satellite du système dont la capacité de démodulation maximale n'est pas atteinte,
- Transmettre à chaque satellite du système une information de planification de ressources contenant une association entre d'une part le faisceau ou la porteuse à démoduler pour la zone de couverture du satellite et d'autre part le satellite en charge de la démodulation du signal reçu.

8. Procédé de planification de ressources dans un système de télécommunications comprenant plusieurs satellites, chaque satellite comprenant un processeur, le procédé comprenant les étapes de, pour chaque intervalle de temps donné :
- Pour chaque faisceau ou porteuse associé à une zone de couverture, affecter (501) la démodulation du faisceau ou de la porteuse au satellite recevant le faisceau ou la porteuse si la capacité de démodulation maximale du processeur du satellite n'est pas atteinte, sinon affecter (502) la démodulation du faisceau ou de la porteuse à un autre satellite du système dont la capacité de démodulation maximale n'est pas atteinte,
- Transmettre (503) à chaque satellite du système une information de planification de ressources contenant une association entre d'une part le faisceau ou la porteuse à démoduler pour la zone de couverture du satellite et d'autre part le satellite en charge de la démodulation du signal reçu,
- Pour démoduler un faisceau ou une porteuse, encapsuler les échantillons numériques à démoduler dans une trame contenant au moins un identifiant indiquant que les échantillons numériques ne sont pas démodulés et une adresse destination du satellite en charge de la démodulation des échantillons numériques.

## Patentansprüche

1. Nutzlast eines Telekommunikationssatelliten, umfassend einen Empfänger (ANT) für Signale, die auf einem Uplink ausgesendet werden, einen analog-digital-Umwandler (ADC) zum Umwandeln der empfangenen Signale in digitale Abtastwerte, ein Modem (MOD), eine Ausrüstung zur Kommunikation zwischen Satelliten (ISL) und ein Traffic-Management-Organ (GT), welches dazu konfiguriert ist, um, in Abhängigkeit von einer Ressourcenplanungsinformation (PL), welche von der Demodulationskapazität der Nutzlast abhängt, die digitalen Abtastwerte entweder an das Modem (MOD) zur Demodulation zu übertragen, oder an die Ausrüstung zur Kommunikation zwischen Satelliten (ISL) zur Übertragung an einen Empfängersatelliten zu übertragen, welcher für die Demodulation der digitalen Abtastwerte zuständig ist,
wobei jedes durch den Signalempfänger (ANT) empfangene Signal einem Strahl oder einem Träger zugewiesen wird, und die Ressourcenplanungsinformation (PL) eine Zuordnung zwischen dem Strahl oder dem Träger einerseits und dem für die Demodulation des empfangenen Signals zuständigen Satelliten andererseits enthält,
wobei das Traffic-Management-Organ (GT) konfiguriert ist, um die digitalen Abtastwerte in einem Rahmen zu verkapseln, welcher mindestens einen Identifikator enthält, welcher angibt, dass die digitalen Abtastwerte nicht demoduliert sind, und eine Empfängeradresse des für die Demodulation der digitalen Abtastwerte zuständigen Satelliten enthält.

2. Nutzlast eines Telekommunikationssatelliten nach Anspruch 1, umfassend einen Router (RT) für das Routing der durch das Traffic-Management-Organ (GT) erzeugten oder durch das Modem (MOD) demodulierten Rahmen an ihren Zielort.

3. Nutzlast eines Telekommunikationssatelliten nach Anspruch 2, wobei der Router (RT) konfiguriert ist, um, wenn er einen Rahmen von der Ausrüstung zur Kommunikation zwischen Satelliten (ISL) empfängt, diesen an das Modem (MOD) zur Demodulation zu übertragen, wenn der Rahmen zu demodulierende digitale Abtastwerte enthält, deren Zieladresse diejenige des Satelliten ist.

4. Nutzlast eines Telekommunikationssatelliten nach einem der Ansprüche 2 oder 3, wobei der Router (RT) konfiguriert ist, um, wenn er einen Rahmen von der Ausrüstung zur Kommunikation zwischen Satelliten (ISL) empfängt, diesen an das Modem (MOD) zur Modulation zu übertragen, wenn der Rahmen demodulierte Abtastwerte enthält, deren Zieladresse diejenige des Satelliten ist.

5. Nutzlast eines Telekommunikationssatelliten nach einem der vorhergehenden Ansprüche, wobei die Ausrüstung zur Kommunikation zwischen Satelliten (ISL) in der Lage ist, eine optische Kommunikationsverbindung zwischen mindestens zwei Satelliten herzustellen.

6. Telekommunikationssystem, umfassend mehrere Satelliten (SAT₁, SAT₂, SAT₃), welche jeweils eine Nutzlast nach einem der vorhergehenden Ansprüche umfassen, wobei das System ebenfalls eine Ressourcenplanungsausrüstung (EPR) umfasst, welche konfiguriert ist, um zu unterschiedlichen Zeitpunkten eine Ressourcenplanungsinformation (PL) zu bestimmen und diese an die Satelliten des Systems zu übertragen.

7. Telekommunikationssystem nach Anspruch 6, wobei die Ressourcenplanungsausrüstung (EPR) konfiguriert ist, um für jedes gegebene Zeitintervall folgende Schritte auszuführen:
- für jeden Strahl oder Träger, welcher einem Abdeckungsbereich zugeordnet ist, Zuweisen der Demodulation des Strahls oder des Trägers an den Satelliten, welche den Strahl oder den Träger empfängt, wenn seine maximale Demodulationskapazität nicht erreicht ist, ansonsten Zuweisen der Demodulation des Strahls oder des Trägers an einen anderen Satelliten des Systems, dessen maximale Demodulationskapazität nicht erreicht ist,
- Übertragen, an jeden Satelliten des Systems, einer Ressourcenplanungsinformation, welche eine Zuordnung zwischen dem zu demodulierenden Strahl oder Träger für den Abdeckungsbereich des Satelliten einerseits und dem für die Demodulation des empfangenen Signals zuständigen Satelliten andererseits enthält.

8. Verfahren zur Ressourcenplanung in einem Telekommunikationssystem, welches mehrere Satelliten umfasst, wobei jeder Satellit einen Prozessor umfasst, wobei das Verfahren für jedes gegebene Zeitintervall folgende Schritte umfasst:
- für jeden Strahl oder Träger, welcher einem Abdeckungsbereich zugeordnet ist, Zuweisen (501) der Demodulation des Strahls oder des Trägers an den Satelliten, welche den Strahl oder den Träger empfängt, wenn die maximale Demodulationskapazität des Prozessors des Satelliten nicht erreicht ist, ansonsten Zuweisen (502) der Demodulation des Strahls oder des Trägers an einen anderen Satelliten des Systems, dessen maximale Demodulationskapazität nicht erreicht ist,
- Übertragen (503), an jeden Satelliten des Systems, einer Ressourcenplanungsinformation, welche eine Zuordnung zwischen dem zu demodulierenden Strahl oder Träger für den Abdeckungsbereich des Satelliten einerseits und dem für die Demodulation des empfangenen Signals zuständigen Satelliten andererseits enthält,
- zum Demodulieren eines Strahls oder eines Trägers, Verkapseln der zu demodulierenden digitalen Abtastwerte in einem Rahmen, welcher mindestens einen Identifikator enthält, welcher angibt, dass die digitalen Abtastwerten nicht demoduliert sind, und eine Empfängeradresse des für die Demodulation der digitalen Abtastwerte zuständigen Satelliten enthält.

## Claims

1. Telecommunications satellite payload comprising a signal receiver (ANT) for signals transmitted on an uplink, an analogue-to-digital converter (ADC) for converting the received signals into digital samples, a modem (MOD), an inter-satellite communication device (ISL) and a traffic management unit (GT) configured, on the basis of resource planning information (PL) depending on the demodulation capacity of the payload, to transmit the digital samples either to the modem (MOD) in order to be demodulated or to the inter-satellite communication device (ISL) in order to be transmitted to a recipient satellite in charge of the demodulation of the digital samples,
each signal received by the signal receiver (ANT) being associated with a beam or with a carrier, and the resource planning information (PL) containing an association between the beam or the carrier, on the one hand, and the satellite in charge of the demodulation of the received signal, on the other hand,
the traffic management unit (GT) being configured so as to encapsulate the digital samples in a frame containing at least one identifier indicating that the digital samples are not demodulated and a destination address of the satellite in charge of the demodulation of the digital samples.

2. Telecommunications satellite payload according to claim 1, comprising a router (RT) for routing the frames generated by the traffic management unit (GT) or demodulated by the modem (MOD) to their destination.

3. Telecommunications satellite payload according to claim 2, wherein the router (RT) is configured, when it receives a frame from the inter-satellite communication device (ISL), to transmit it to the modem (MOD) in order to be demodulated if the frame contains digital samples to be demodulated whose destination address is that of the satellite.

4. Telecommunications satellite payload according to any one of claims 2 or 3, wherein the router (RT) is configured, when it receives a frame from the inter-satellite communication device (ISL), to transmit it to the modem (MOD) in order to be modulated if the frame contains demodulated samples whose destination address is that of the satellite.

5. Telecommunications satellite payload according to one of the preceding claims, wherein the inter-satellite communication device (ISL) is able to establish an optical communication link between at least two satellites.

6. Telecommunications system comprising several satellites (SAT₁,SAT₂,SAT₃) each comprising a payload according to one of the preceding claims, the system also comprising a resource planning device (EPR) configured to determine, at various times, resource planning information (PL) and to transmit it to the satellites of the system.

7. Telecommunications system according to claim 6, wherein the resource planning device (EPR) is configured to execute, for each given time interval, the steps of:
- for each beam or carrier associated with a coverage area, assigning the demodulation of the beam or of the carrier to the satellite receiving the beam or the carrier if its maximum demodulation capacity has not been reached, otherwise assigning the demodulation of the beam or of the carrier to another satellite of the system whose maximum demodulation capacity has not been reached,
- transmitting, to each satellite of the system, resource planning information containing an association between the beam or the carrier to be demodulated for the coverage area of the satellite, on the one hand, and the satellite in charge of the demodulation of the received signal, on the other hand.

8. Method for planning resources in a telecommunications system comprising several satellites, each satellite comprising a processor, the method comprising the steps of, for each given time interval:
- for each beam or carrier associated with a coverage area, assigning (501) the demodulation of the beam or of the carrier to the satellite receiving the beam or the carrier if the maximum demodulation capacity of the processor of the satellite has not been reached, otherwise assigning (502) the demodulation of the beam or of the carrier to another satellite of the system whose maximum demodulation capacity has not been reached,
- transmitting (503), to each satellite of the system, resource planning information containing an association between the beam or the carrier to be demodulated for the coverage area of the satellite, on the one hand, and the satellite in charge of the demodulation of the received signal, on the other hand,
- in order to demodulate a beam or a carrier, encapsulating the digital samples to be demodulated in a frame containing at least one identifier indicating that the digital samples are not demodulated and a destination address of the satellite in charge of the demodulation of the digital samples.
